# EUROPEAN PATENT APPLICATION

(11) **EP 4 729 566 A1**
(43) Date of publication of application: **22.04.2026**
(21) Application number: 24213849.3
(22) Date of filing: 19.11.2024
(51) Int. Cl.: C08J 3/12

(54) **METHOD FOR MANUFACTURING POLYOLEFIN ULTRAFINE POWDER**

(30) Priority: 15.10.2024 KR 20240140443
(71) Applicant: Two H Chem Ltd., Goesan-gun, Chungcheongbuk-do 28039 (KR)
(72) Inventor: Chung, Hwa Young, 27916 Jeungpyeong-eup, Jeungpyeong-gun, Chungcheongbuk-do (KR); Hwang, Seok Hwan, 28123 Ochang-eup, Cheongwon-gu, Cheongju-si, Chungcheongbuk-do (KR); Jang, Rae Choul, 28039 Goesan-eup, Goesan-gun, Chungcheongbuk-do (KR); Kim, Dae In, 27920 Jeungpyeong-eup, Jeungpyeong-gun, Chungcheongbuk-do (KR); Noh, Tae Joon, 13973 Manan-gu, Anyang-si, Gyeonggi-do (KR); Yun, Kang Jae, 28125 Ochang-eup, Cheongwon-gu, Cheongju-si, Chungcheongbuk-do (KR)
(74) Representative: Caspary, Karsten

(57) **Abstract**

The present disclosure relates to a method for manufacturing a polyolefin ultrafine powder and a polyolefin ultrafine powder manufactured according to the method. More particularly, a polyolefin ultrafine powder having an average particle size of about 30 um or less is provided by a melting step of mixing a polyolefin resin with a xylene mixed solvent and then heating the mixture to prepare a polyolefin melt, a crystallization step of cooling the polyolefin melt to perform crystallization, a reduced pressure wet grinding step of simultaneously wet grinding and drying the crystallized reactant together with a solvent, and an ultrafine grinding step of dry-grinding the powder. In the present disclosure, a xylene mixed solvent is used as a mixed solvent for melting the polyolefin resin, and the ultrafine polyolefin powder manufactured accordingly can be applied to general-purpose material fields such as architecture, civil engineering, chemical products, etc., and in particular, has properties advantageous for the manufacture of secondary battery electrodes.

## Description

### CROSS-REFERENCE TO RELATED APPLICATION(S)

This application claims benefit of priority to Korean Patent Application No. 10-2024-0140443 filed on Oct. 15, 2024 in the Korean Intellectual Property Office, the disclosure of which is incorporated herein by reference in its entirety.

### BACKGROUND

### 1. FIELD

The present disclosure relates to a polyolefin powder having a small and uniform size at a micrometer level and a method for manufacturing the same, wherein the polyolefin powder according to the present disclosure has an average particle size and properties that can be usefully used not only in general-purpose material fields such as construction, civil engineering, and chemical products, but also in the manufacture of secondary battery electrodes.

### 2. DESCRIPTION OF RELATED ART

Polyolefin-based polymer resins, such as polypropylene (PP) and polyethylene (PE), are one of the most representative general-purpose plastic materials used in various ways in films, sheets, tubes, fibers, etc. because they are inexpensive and easy to process.

A technology of finely grinding these general-purpose polyolefin-based polymer resins into micrometer-sized powders and apply them to new applications has been attracting attention.

In the existing method for manufacturing a polyolefin resin into a powder, the powder was obtained by feeding the pellet-shaped resin of 3 to 5 mm in size into a specific grinder equipped with a cutter blade and repeatedly cutting, impacting, and abrading the resin by high-speed rotation. However, unlike metals and inorganic materials, polyolefin-based resins, which are plastic elastomers, are not easily subjected to mechanical grinding due to their unique viscoelasticity, and thus it is difficult to manufacture micrometer-sized fine particles, and a production yield is also low.

In particular, in the case of polypropylene, since the desired size of powder cannot be obtained by conventional mechanical grinding, a freeze-grinding method has been used to grind the polypropylene resin by cooling it below its brittle temperature using liquid nitrogen, dry ice, etc. However, powders manufactured by this freeze-grinding method still have disadvantages such as large particle sizes, uneven particle size distribution, irregular particle shapes, and high manufacturing costs.

### [Related Art Document]

### [Patent Document]

(Patent Document 0001) Korean Patent Registration No. 1418786 (July 7, 2014)

### SUMMARY

The present disclosure has been made in an effort to solve the problem of the prior art as described above, and an object of the present disclosure is to provide a method for manufacturing a micrometer-sized fine polyolefin powder having uniform particle shape, average particle size, and particle size distribution.

For this object, an ultrafine polyolefin powder having an average particle size in micrometer units, about 30 um or less, may be manufactured by mixing a polyolefin resin raw material and a xylene mixed solvent adjusted to have a specific composition ratio to prepare a polyolefin melt, crystallizing the polyolefin melt to perform chemical grinding, and then performing a mechanical grinding process under optimal conditions.

In an aspect of the present disclosure, there is provided a method for manufacturing a polyolefin ultrafine powder, comprising a melting step of mixing a polyolefin resin and a xylene mixed solvent and then heating the mixture to prepare a polyolefin melt; a crystallization step of cooling the polyolefin melt to prepare a crystallization mixture; a reduced pressure wet grinding step of stirring under a reduced pressure condition so that grinding and drying of the crystallization mixture obtained in the crystallization step may be performed simultaneously; and a fine grinding step of dry-grinding a powder subjected to the reduced pressure wet grinding step to grind the powder to an average particle size of 30 um or less.

The polyolefin resin is preferably polyethylene and/or polypropylene.

The xylene mixed solvent may include xylene; a C₆-C₈ aromatic component including ethylbenzene, benzene, and toluene, but not including xylene; and a non-aromatic component not included in xylene and the C₆-C₈ aromatic component.

The C₆-C₈ aromatic component may be included in an amount of less than 80 wt% in the xylene mixed solvent.

More preferably, a stirring speed in the reduced pressure wet grinding step may exceeds 380 rpm, a gauge pressure in the reduced pressure wet grinding step may be - 0.05 to -0.1 MPa, and a heating temperature in the melting step may be 120 to 140°C.

The fine grinding step may be performed once, or may be repeated at least twice.

In another aspect of the present disclosure, there is provided a polyolefin ultrafine powder manufactured by the method as described above, wherein the polyolefin ultrafine powder subjected to the fine grinding step may have an average particle size of 30 um or less.

In another aspect of the present disclosure, there is provided a secondary battery electrode comprising the polyolefin ultrafine powder.

### BRIEF DESCRIPTION OF DRAWINGS

The above and other aspects, features, and advantages of the present disclosure will be more clearly understood from the following detailed description taken in conjunction with the accompanying drawings, in which:

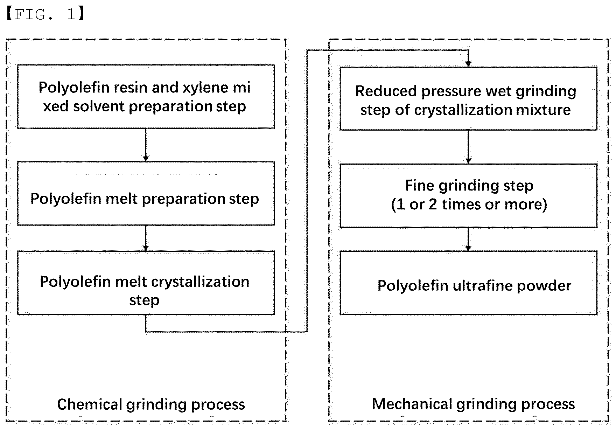

FIG. 1 is a diagram schematically illustrating a process for manufacturing a polyolefin ultrafine powder according to an embodiment of the present disclosure.

### DETAILED DESCRIPTION

Before the preferred embodiments of the present disclosure are described in detail below, it should be noted in advance that the terms and words used in this specification and claims should not be interpreted as limited to their conventional or dictionary meanings, but should be interpreted as meanings and concepts that conform to the technical idea of the present disclosure.

Throughout the present specification, when a part "comprises" a certain component, this means that other components may be further included, rather than excluding other components, unless specifically stated to the contrary.

Throughout the present specification, "%" used to indicate the concentration of a particular substance means (weight/weight)% for solid/solid, (weight/ weight)% for solid/liquid, and (weight / weight)% for liquid/liquid, unless otherwise stated.

The steps may be performed in a different order than stated, unless the context clearly indicates a particular order. That is, the steps may be performed in the same order as stated, may be performed substantially simultaneously, or may be performed in reverse order.

Hereinafter, embodiments of the present disclosure will be described. However, the scope of the present disclosure is not limited to the following preferred embodiments, and it is possible to make various modifications from the contents described in the specification by a person skilled in the art having ordinary knowledge in the technical field to which the present disclosure belongs.

The present disclosure relates to a method for manufacturing a polyolefin ultrafine powder, and provides a method for manufacturing a polyolefin ultrafine powder having ultrafine size at a micro-level and having a uniform size, unlike the existing mechanical grinding method. The polyolefin ultrafine powder according to the present disclosure may be applied to general-purpose material fields such as construction, civil engineering, chemical products, etc., and in particular, may be usefully used in the manufacture of secondary battery electrodes.

The method for manufacturing a polyolefin ultrafine powder according to the present disclosure comprises: a melting step of mixing a polyolefin resin and a xylene mixed solvent and then heating the mixture to prepare a polyolefin melt; a crystallization step of cooling the polyolefin melt to prepare a crystallization mixture; a reduced pressure wet grinding step of stirring under a reduced pressure condition so that grinding and drying of the crystallization mixture obtained in the crystallization step may be performed simultaneously; and a fine grinding step of dry-grinding a powder subjected to the reduced pressure wet grinding step to grind the powder to an average particle size of 30 um or less.

The polyolefin resin may be polyethylene and/or polypropylene. The polyolefin resin may include, for example, one or more selected from low density polyethylene, high density polyethylene, linear low density polyethylene, homopolypropylene, block polypropylene, and random polypropylene, and an available polyolefin resin is not limited thereto.

The xylene mixed solvent may include xylene; a C₆-C₈ aromatic component including ethylbenzene, benzene, and toluene, but not including xylene; and a non-aromatic component not included in xylene and the C₆-C₈ aromatic component.

The xylene is a type of aromatic hydrocarbon, has a chemical structure similar to benzene, and is composed of three isomers. The xylene is used as a solvent in various industries due to its high solubility, but has a high volatilization rate.

The C₆-C₈ aromatic component is an aromatic component having 6 to 8 carbon atoms, and is an aromatic substance including ethylbenzene, benzene, and toluene, but not including xylene. That is, the term "C₆-C₈ aromatic component" as used herein means "an aromatic substance having 6 to 8 carbon atoms, and including ethylbenzene, benzene and toluene, but not including xylene." The C₆-C₈ aromatic component may include ethylbenzene, benzene, and toluene, and for example, the C₆-C₈ aromatic component may be comprised of ethylbenzene, benzene, and toluene.

This C₆-C₈ aromatic component may be included in an amount of less than 80 wt% in the xylene mixed solvent. A boiling point of the C₆-C₈ aromatic component is lower than that of xylene. Thus, if the C₆-C₈ aromatic component is included in an amount of 80 wt% or more, a solubility of the C₆-C₈ aromatic component in the polyolefin resin is reduced in the process of mixing and heating the polyolefin resin and the xylene mixed solvent in the melting step. This problem may cause difficulty in manufacturing polyolefin ultrafine powders in a desired size, a large particle size deviation of the powder, and a large particle size of the powder. Therefore, it is preferable that the C₆-C₈ aromatic component is included in an amount of less than 80 wt% in the xylene mixed solvent.

The melting step comprises mixing a polyolefin resin and a xylene mixed solvent and then heating the mixture to prepare a polyolefin melt. The amount of the polyolefin resin and the xylene mixed solvent mixed in this step is not particularly limited, but may be mixed with the xylene mixed solvent in an appropriate amount depending on the type or characteristics of the polyolefin resin.

In this step, heating may be performed to melt the polyolefin resin, wherein a heating temperature may be 120 to 140°C. If heating is performed below the above temperature, the polyolefin resin is not sufficiently melted. If heating is performed at a temperature exceeding the above range, it is difficult to manufacture polyolefin ultrafine powders of sufficiently fine size through subsequent step because the xylene mixed solvent is rapidly volatilized and thus rheology properties are changed. Thus, it is preferable that the melting is performed at the temperature described above.

In this step, stirring may be performed for uniform melting, and stirring conditions are not particularly limited.

The crystallization step comprises cooling the polyolefin melt to prepare a crystallization mixture. A cooling temperature is not particularly limited, and for example, cooling may be performed at 10 to 80°C. This cooling process may result in precipitation of the polyolefin to manufacture a polyolefin powder. In this step, stirring may be performed while cooling is in progress, and the stirring may result in the precipitation of a more uniformly sized polyolefin powder. In this case, stirring conditions are not particularly limited.

The reduced pressure wet grinding step comprises simultaneously grinding and drying a crystallization mixture by stirring the crystallization mixture under a reduced pressure condition, whereby the solvent contained in the crystallization mixture may be evaporated to obtain a polyolefin powder.

In this step, stirring is performed to agitate the crystallization mixture to promote evaporation of the solvent, while uniformly adjusting the size of the polyolefin powder obtained. A stirring speed may be greater than 380 rpm, preferably 480 rpm or more, and more preferably 580 rpm or more.

If the stirring speed is too slow, a sufficiently homogeneous polyolefin powder may not be obtained in this step and the particle size of the polyolefin powder obtained after the final step may be increased by several hundred micrometers, resulting in the inability to manufacture an ultrafine powder. Therefore, it is preferable that the stirring is performed under the stirring conditions described above.

In this step, the stirring may be performed under reduced pressure, which allows the xylene mixed solvent to evaporate rapidly, resulting in a more effective manufacture of the ultrafine powders. In this case, the reduced pressure condition is preferably a gauge pressure of -0.05 to -0.1 MPa. If is outside of this range, it is difficult to manufacture sufficiently small and uniformly sized polyolefin ultrafine powders.

After such a reduced pressure wet milling step, if any residual solvent remains, a drying step may be performed to further remove the solvent, and the drying method in this step is not particularly limited.

Next, a fine grinding step of dry-grinding a powder subjected to the reduced pressure wet grinding step to grind the powder so that an average particle size is 30 um or less, is performed. This step comprises grinding the powder with a high-speed rotating cutter blade under dry conditions without any water or solvent, and an ultrafine polyolefin powder having an average particle size of 30 um or less may be manufactured by this step.

In this step, in order to manufacture the ultrafine powder having the particle size as described above, a rotation speed of the cutter blade is preferably 3,000 to 6,000 rpm, an internal temperature of a grinder is preferably 30 to 60°C, and the amount of raw material input may be 30 to 60 g/min. This grinding step may be performed once, or may be repeated twice or more.

Through this process, an ultrafine polyolefin powder having an average particle size of 30 um or less may be manufactured. The method for manufacturing an ultrafine polyolefin powder according to the present disclosure has advantages that an ultrafine polyolefin powder having an average particle size of very fine and a uniform particle size may be manufactured, the manufacturing process difficulty is not high, and the productivity and yield are excellent, unlike existing methods.

The present disclosure includes an ultrafine polyolefin powder having an average particle size of 30 um or less manufactured by the method according to an embodiment of the present disclosure as described above.

The present disclosure also includes a secondary battery electrode comprising the ultrafine polyolefin powder.

Hereinafter, specific actions and effects of the present disclosure will be described with reference to an embodiment of the present disclosure. However, it is presented as a preferred example of the present disclosure, and the scope of the present disclosure is not limited by the embodiments.

### [Example 1]

### Preparation of polyolefin melt

To a 5 L 3-necked flask reaction vessel equipped with a stirrer were added 10 wt% of polypropylene as a polyolefin resin (homopolypropylene with a specific gravity of 0.90) and 90 wt% of a xylene mixed solvent as a solvent. A polyolefin melt was prepared by melting the polypropylene in the xylene mixed solvent at a temperature of 140° C for a residence time of 60 minutes at elevated temperature while stirring at a stirrer rotation speed of 300 rpm in the reactor.

A mixed solvent containing 94.5 wt% of xylene, 5.3 wt% of C₆-C₈ aromatic components (a mixture of ethylbenzene, benzene, and toluene), and 0.2 wt% of non-aromatic components was prepared and used as the xylene mixed solvent.

### Preparation of crystallization mixture

The crystallization mixture was prepared by cooling the polyolefin melt to room temperature and subjecting it to a crystallization process.

### Manufacture of polyolefin powder

The crystallization mixture was ground in a reduced pressure chamber and subjected to reduced pressure grinding in which dry and wet grinding were performed simultaneously. The inside of the reduced pressure chamber was equipped with a blade that rotates to grind and dry the contents, and reduced pressure wet grinding was performed under the condition of -0.1 MPa gauge pressure while maintaining the stirring speed at 580 rpm during reduced pressure grinding for a residence time of 120 minutes.

The ground material that has undergone the reduced pressure wet grinding process was dried to remove the remaining xylene mixed solvent, and the polypropylene powder from which the xylene mixed solvent was removed was subjected to dry-grinding to manufacture a polypropylene ultrafine powder.

Dry-grinding is a method of grinding raw materials with high-speed rotating cutter blades by injecting raw materials between a rotating body to which a plurality of cutter blades are attached and a fixed body. The dry-grinding was performed under the conditions of a rotation speed of 5,000 rpm, an internal temperature of the grinder of 50° C, and an amount of raw material input of 50 g/min.

### [Example 2]

A polypropylene ultrafine powder was manufactured by the same process as in Example 1, except that the composition of the xylene mixed solvent was changed to 80.5 wt% of xylene, 19.3 wt% of C₆-C₈ aromatic components, and 0.2 wt% of other non-aromatic components.

### [Example 3]

A polypropylene ultrafine powder was manufactured by the same process as in Example 1, except that the composition of the xylene mixed solvent was changed to 49.0 wt% of xylene, 50.9 wt% of C₆-C₈ aromatic components, and 0.1 wt% of other non-aromatic components.

### [Example 4]

A polypropylene ultrafine powder was manufactured by the same process as in Example 1, except that the composition of the xylene mixed solvent was changed to 35.0 wt% of xylene, 64.9 wt% of C₆-C₈ aromatic components, and 0.1 wt% of other non-aromatic components.

### [Comparative Example 1]

A polypropylene ultrafine powder was manufactured by the same process as in Example 1, except that the composition of the xylene mixed solvent was changed to 19.3 wt% of xylene, 80.6 wt% of C₆-C₈ aromatic components, and 0.1 wt% of other non-aromatic components.

### [Comparative Example 2]

A polypropylene ultrafine powder was manufactured by the same process as in Example 1, except that the xylene mixed solvent was replaced with 100 wt% of C₆-C₈ aromatic components consisting of ethylbenzene, benzene, and toluene.

### [Experimental Example 1]

Using a laser diffraction particle size analyzer (Mastersizer 3000, Malvern Panalytical), the particle sizes of the polypropylene ultrafine powders of Examples 1 to 4 and Comparative Examples 1 and 2, which were completed until dry grinding, were measured several times, and the particle sizes were shown in Table 1 in the form of "average particle size ± standard deviation".

**[Table 1]**

| | Xylene mixed solvent (wt%) | | | | Average particle size (*µ*m) |
|---|---|---|---|---|---|
| | Xylene | C₆-C₈ aromatic component | Non-aromatic component | Total | |
| Example 1 | 94.5 | 5.3 | 0.2 | 100 | 14±1 |
| Example 2 | 80.5 | 19.3 | 0.2 | 100 | 19±1 |
| Example 3 | 49 | 50.9 | 0.1 | 100 | 22±2 |
| Example 4 | 35 | 64.9 | 0.1 | 100 | 26±2 |
| Com. Example 1 | 19.3 | 80.6 | 0.1 | 100 | 56±2 |
| Com. Example 2 | 0 | 100 | 0 | 100 | 95±2 |

It could be confirmed from Examples 1 to 8 of Tables 1 and 2 above that ultrafine polyolefin powders having an average particle size of 30 um or less were manufactured by sequentially performing chemical grinding (reduced pressure wet grinding) and mechanical grinding processes according to the present disclosure. In particular, it could be confirmed that during the process for manufacturing a polyolefin melt for chemical grinding, the average size of the final particles obtained by the same process increased as the content of C₆-C₈ aromatic components increased (see Examples 1 to 4).

It was also found that in order to manufacture ultrafine polyolefin powders having an average particle size of 30 um or less, the C₆-C₈ aromatic component in the xylene mixed solvent should be less than 80 wt% (see Examples 1 to 4 and Comparative Example 1 in Table 1).

These results are attributed to the fact that a high content of C₆-C₈ aromatic components including ethylbenzene, benzene, and toluene, which have relatively low boiling points compared to xylene, among the composition of the xylene mixed solvent, reduces the solubility of the C₆-C₈ aromatic components in the polyolefin resin during heating process of the melt step to prepare the polyolefin melt.

In other words, it could be confirmed from the results in Table 1 that the lower solubility of the polyolefin melt resulted in an increase in the average particle size and a broader particle size distribution. It could be confirmed that the content of C₆-C₈ aromatic components in the xylene mixed solvent is preferably 80 wt% or less for the manufacture of ultrafine polyolefin powder having an average particle size of 30 um or less.

### [Examples 5 to 8]

Polypropylene ultrafine powders of Examples 5 to 8 were manufactured using the same process as in Example 1, while changing the input amount of polypropylene and xylene mixed solvent as a polyolefin resin in the polyolefin melt manufacturing step of the Example 1, as shown in Table 2 below.

In this case, the composition of the xylene mixed solvent used was kept constant at 94.5 wt% of xylene, 5.3 wt% of C₆-C₈ aromatic components, and 0.2 wt% of other non-aromatic components.

### [Comparative Example 3]

A polypropylene ultrafine powder of Comparative Example 3 was manufactured in the same manner as in Example 5, using the same ratio of polypropylene and xylene mixed solvent as in Example 5, except that the composition of the xylene mixed solvent was changed to 19.9 wt% of xylene, 80.0 wt% of C₆-C₈ aromatic components, and 0.1 wt% of other non-aromatic components.

### [Comparative Examples 4 to 6]

Polypropylene ultrafine powders of Comparative Examples 4 to 6 were manufactured using the same ratio of polypropylene and xylene mixed solvents as in Examples 6 to 8, except that the composition of the xylene mixed solvent was changed as shown in Table 2 below.

### [Experimental Example 2]

Using a laser diffraction particle size analyzer (Mastersizer 3000, Malvern Panalytical), the particle sizes of the polypropylene ultrafine powders of Examples 5 to 8 and Comparative Examples 3 to 6, which were completed until dry grinding, were measured several times, and the particle sizes were shown in Table 2 in the form of "average particle size ± standard deviation".

**[Table 2]**

| | Polyolefin melt (wt%) | | Xylene mixed solvent (wt%) | | | | Average particl e size (µm) |
|---|---|---|---|---|---|---|---|
| | Polyprop ylene resin | Xylene mixed solvent | Xylene | C₆-C₈ aromatic Component | Non-aromatic Component | Total | |
| Example 5 | 5 | 95 | 94.5 | 5.3 | 0.2 | 100 | 14±1 |
| Example 6 | 20 | 80 | 94.5 | 5.3 | 0.2 | 100 | 14±1 |
| Example 7 | 35 | 65 | 94.5 | 5.3 | 0.2 | 100 | 16±1 |
| Example 8 | 50 | 50 | 94.5 | 5.3 | 0.2 | 100 | 22±2 |
| Com. Example 3 | 5 | 95 | 19.9 | 80 | 0.1 | 100 | 60±2 |
| Com. Example 4 | 20 | 80 | 19.7 | 80.2 | 0.1 | 100 | 62±2 |
| Com. Example 5 | 35 | 65 | 19.4 | 80.5 | 0.1 | 100 | 62±2 |
| Com. Example 6 | 50 | 50 | 18.9 | 81 | 0.1 | 100 | 75±2 |

It could be confirmed from Table 2 that the size of the finally obtained particles slightly increased as the content of the polyolefin resin increased, but the content of xylene in the xylene mixed solvent (i.e., the content other than C₆-C₈ aromatic components and non-aromatic components) had a greater effect. In particular, in Examples 5 to 8, ultrafine powders having an average particle size of 30 um or less could be manufactured, but in Comparative Examples 3 to 6, powders with a size at least twice that of the Examples were formed. Therefore, it could be confirmed that the content of the C₆-C₈ aromatic component in the xylene mixed solvent was preferably 80 wt% or less as in Experimental Experiment 1.

Furthermore, even if the content of the C₆-C₈ aromatic component is 80 wt% or less, the average particle size also increases and the production yield decreases if the content of the polyolefin is insufficient or the content of the xylene mixed solvent is excessive. Therefore, it was found that it is preferable to use a polyolefin resin in the range of 5 to 50 wt% and a xylene mixed solvent in the range of 95 to 50 wt% for the manufacture of the polyolefin ultrafine powder. In particular, it was found that it is more preferable when the polyolefin resin and the xylene mixed solvent are mixed in a weight ratio of 1:1 to 45.

### [Examples 9 and 10]

A polypropylene ultrafine powder of Example 9 was manufactured using a manufacturing method applying the same conditions as the polyolefin powder manufacturing method of Example 1. A polypropylene ultrafine powder of Example 10 was manufactured as in Example 9, except that the gauge pressure of the reduced pressure condition was changed to - 0.05 MPa.

### [Comparative Examples 7 to 10]

A polypropylene ultrafine powder of Comparative Example 7 was manufactured as in Example 9, but the reduced pressure was excluded in the recued pressure wet grinding step. Polypropylene ultrafine powders of Comparative Examples 8, 9, and 10 were manufactured where only the stirring speed was adjusted to 380 rpm, 190 rpm, and 60 rpm, respectively.

### [Experimental Example 3]

Using a laser diffraction particle size analyzer (Mastersizer 3000, Malvern Panalytical), the particle sizes of the polypropylene ultrafine powders of Examples 9 and 10 and Comparative Examples 7 to 10 that were subjected only to the reduced pressure wet grinding step, and the particle sizes of the polypropylene ultrafine powders that were subjected to the drying and dry grinding processes, were measured several times, respectively, and were shown in Table 3 in the form of "average particle size ± standard deviation".

**[Table 3]**

| | Reduced pressure wet grinding operation conditions | | Average particle size after reduced pressure wet grinding (µm) | Final average particle size (µm) |
|---|---|---|---|---|
| | Rotation speed (rpm) | Gauge pressure (Mpa) | | |
| Example 9 | 580 | -0.1 | 430 | 14±1 |
| Example 10 | 580 | -0.05 | 713 | 19±1 |
| Com. Example 7 | 580 | 0 | 982 | 32±2 |
| Com. Example 8 | 380 | -0.1 | 1320 | 72±2 |
| Com. Example 9 | 190 | -0.1 | 2875 | 155±2 |
| Com. Example 10 | 60 | -0.1 | 3942 | 324±2 |

Referring to the experimental results in Table 3 above, it could be confirmed that both the reduced pressure condition and the rotational speed had an effect on the final average particle size in the reduced pressure wet grinding step, and the effect of the rotational speed was greater. In particular, when no reduced pressure condition was not applied as in Comparative Example 7, the particle size increased by more than 1.5 times or more than that of Examples 9 and 10 where the reduced pressure conditions were applied under the same conditions. Thus, it could be confirmed that a reduced pressure condition lower than atmospheric pressure (gauge pressure of -0.05 to -0.1 MPa) was required inside a reduced pressure wet grinding chamber.

Furthermore, when the results of Example 9 and Comparative Examples 8 to 10 are considered together, it could be confirmed that the rotational speed was greater than 380 rpm, preferably 480 rpm or more, and most preferably 580 rpm or more, as the final average particle size decreases as the rotational speed increases.

The polyolefin ultrafine powder according to the present disclosure manufactured by a multi-step method for the preparation of polyolefin particles in which a chemical grinding process and a mechanical grinding process are organically combined, has an average particle size in micrometer units, in particular 30 um or less, and a uniform particle size distribution, and can therefore also be usefully used for the manufacture of secondary battery electrodes in addition to general-purpose material fields such as construction, civil engineering, chemical products, etc.

## Claims

1. A method for manufacturing a polyolefin ultrafine powder, comprising:
a melting step of mixing a polyolefin resin and a xylene mixed solvent and then heating the mixture to prepare a polyolefin melt;
a crystallization step of cooling the polyolefin melt to prepare a crystallization mixture;
a reduced pressure wet grinding step of stirring the crystallization mixture obtained in the crystallization step under a reduced pressure condition so that grinding and drying of the crystallization mixture may be performed simultaneously; and
a fine grinding step of dry-grinding a powder subjected to the reduced pressure wet grinding step to grind the powder to an average particle size of 30 um or less.

2. The method of claim 1, wherein the polyolefin resin is polyethylene and/or polypropylene.

3. The method of claim 1, wherein the xylene mixed solvent includes
xylene;
a C₆-C₈ aromatic component including ethylbenzene, benzene, and toluene, but not including xylene; and
a non-aromatic component not included in xylene and the C₆-C₈ aromatic component.

4. The method of claim 3, wherein the C₆-C₈ aromatic component is included in an amount of less than 80 wt% in the xylene mixed solvent.

5. The method of claim 1, wherein a stirring speed in the reduced pressure wet grinding step exceeds 380 rpm.

6. The method of claim 1, wherein a gauge pressure in the reduced pressure wet grinding step is -0.05 to -0.1 MPa.

7. The method of claim 1, wherein a heating temperature in the melting step is 120 to 140°C.

8. The method of claim 1, wherein the fine grinding step is performed once, or repeated at least twice.

9. A polyolefin ultrafine powder manufactured by the method of any one of claims 1 to 8, and having an average particle size of 30 um or less.

10. A secondary battery electrode comprising the polyolefin ultrafine powder of claim 9.
